# EUROPEAN PATENT APPLICATION

(11) **EP 3 315 580 A1**
(43) Date of publication of application: **02.05.2018**
(21) Application number: 17198184.8
(22) Date of filing: 25.10.2017
(51) Int. Cl.: C09K 8/60, C09K 8/80, C09D 125/10, C09D 175/04

(54) **ANTIMICROBIAL PROPPANT**

(30) Priority: 26.10.2016 US 201662413035 P; 19.05.2017 LU 100248
(71) Applicant: Covestro LLC, Pittsburgh, PA 15205 (US)
(72) Inventor: CONNOR, Mark, Kempton, Pennsylvania 19529 (US); THOMPSON, James, Moon Township, Pennsylvania 15108 (US); JONES, Philip, Gibsonia, Pennsylvania 15044 (US); SMITH, Natalee, Pittsburgh, Pennsylvania 15212 (US); HASSETT, Paul, Wexford, Pennsylvania 15090 (US)
(74) Representative: Levpat

(57) **Abstract**

The present invention provides for the use of polyurethane dispersions to adhere functional chemicals on to proppants. The present invention offers a way of assuring that the chemical is released in the formation and is released slowly over time.

## Description

### FIELD OF THE INVENTION

The present invention relates in general to oil and gas production and more specifically to adhering functional chemicals to proppants, such as biocides which reduce bacterial growth and related odors in the well.

### BACKGROUND OF THE INVENTION

Hydraulic fracturing is one of the most complex oilfield services employed today, requiring equipment to transport and store water and chemicals, prepare the fracturing fluid, blend the fluid with proppant, pump the fluid down the well and monitor the treatment.

The recovery of resources, such as natural gas or oil, from an underground formation typically involves drilling a wellbore to the formation while circulating a drilling fluid, such as a water-based or oil-based drilling mud, within the wellbore. The drilling fluid flows down through the drill pipe (sometimes called a "drill string"), exits the pipe at a location adjacent the drill bit and then flows up through an annulus formed between the outside of the pipe and the wellbore wall. Circulation of the drilling fluid lubricates the drill bit and removes cuttings from the wellbore.

Coating of hydraulic fracturing (or fracing) sand is not new. Millions of tons of sand or proppant are used in the oil and gas industry every year to stimulate wells and thereby improve productivity. Such sand may be coated to impart specialized functionality when in use in the down-hole environment. The sand "props open" the fractures in the well so that fluids and gas can escape more efficiently. The typical sand coating is either heat or chemically activated so that the sand will "stick" to itself forming a discrete "pack" or sponge-like formation with open pathways for the fluid and gas to escape. After the well is depleted, the sand pack can be "broken" or dissolved so the sand can flow back out of the well and be recovered. Uncoated sand is however, the largest percentage of fracing sand used in the industry.

In most instances, at the surface, fracturing fluid and proppant are mixed on the low pressure side of a positive displacement pump, which is used to push the mixed fluid (slurry) into the formation at a high pressure.

During the drilling and completing of oil and gas wells, precautions must be taken to prevent the introduction of significant numbers of sulfate reducing bacteria (SRB) into the zone. These bacteria can grow in fluids that contain food sources, generally sulfate sources (e.g., lignosulfonates, gypsum) and certain organic materials (e.g., polysaccharides). The bacteria may be picked up from seawater and from water from retaining ponds.

When introducing a fluid containing SRB's downhole, there exist conditions favorable for bacterial growth. The first being a reduced oxygen environment (anaerobic) as SRB's are common anaerobic bacteria. The second condition being additional sources of sulfate and sulfite that can be found in some formations. Under such conditions the SRB's convert the sulfate (or sulfide) into sulfide, generally as the gas "hydrogen sulfide." Oil or natural gas that contains hydrogen sulfide (H₂S) gas is referred to as "sour." Because of the additional cost of refining hydrocarbons containing H₂S, the crude oil/natural gas obtained from these reservoirs has a reduced value. In addition, the presence of such bacteria and their byproducts can reduce the production capability of a field.

A third issue concerns the reaction of H₂S with steel, causing corrosion which can lead to significant mechanical problems with well and production equipment. Given how easy it is to contaminate oil field fluids with bacteria and the commercial damage they can cause, the introduction of additives to prevent the bacteria from growing can be highly desirable. It would further be desirable to have a way to adhere any functional chemical to a proppant to ensure that the chemical is released slowly over time into the well.

### SUMMARY OF THE INVENTION

Accordingly, the present invention provides for adhering functional chemicals to proppants with coatings containing polyurethane dispersions. The present invention offers a way of assuring that the chemical is released into geologic formations and released slowly over time. Such functional chemicals include, but are not limited to, demulsifiers, emulsifiers, corrosion inhibitors, dispersants, filtrate reducers, water clarifiers / deoilers, fluid-loss additives, flocculants, foaming agents, defoaming agents, scale inhibitors, shale control inhibitors, viscosifiers, thinners, wax inhibitors, asphaltene inhibitors, hydrate inhibitors, biocides, rheology modifiers, trace/tagging agents, co-surfactants, co-solvents, H₂S scavengers, ion exchange resins, cement gas blocking agents, cement retarders, de-watering additives, bentonite extenders, friction reducers, gelling agents, gel breakers, iron control additives, clay stabilizers, and iron sulfide dissolvers.

These and other advantages and benefits of the present invention will be apparent from the Detailed Description of the Invention herein below.

### BRIEF DESCRIPTION OF THE FIGURES

The present invention will now be described for purposes of illustration and not limitation in conjunction with the figures, wherein:
FIG. 1 shows biocide killing at 45°C of planktonic cells;
FIG. 2 depicts biocide killing at 45°C of biofilm (sessile) cells;
FIG. 3 illustrates biocide killing at 30°C of planktonic cells;
FIG. 4 shows biocide killing at 30°C of biofilm (sessile) cells;

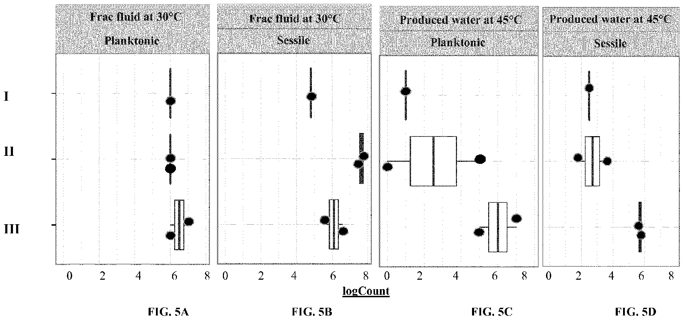

FIG. 5A shows biocide killing at 30°C of planktonic Acid Producing Bacteria (APB) cells in frac fluid at three conditions;
FIG. 5B shows biocide killing at 30°C of sessile Acid Producing Bacteria (APB) cells in frac fluid at three conditions;
FIG. 5C shows biocide killing at 45°C of planktonic Acid Producing Bacteria (APB) cells in produced water at three conditions;
FIG. 5D shows biocide killing at 45°C of sessile Acid Producing Bacteria (APB) cells in produced water at three conditions;

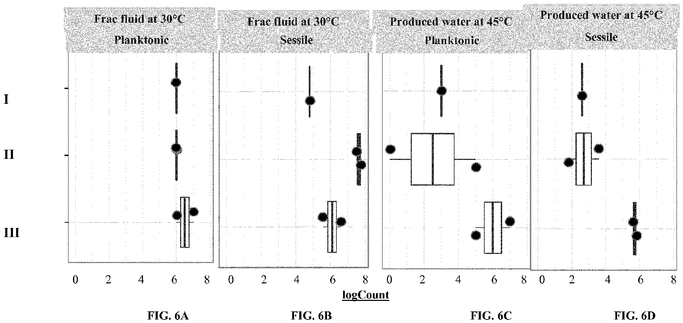

FIG. 6A shows biocide killing at 30°C of planktonic General Heterotrophic Bacteria (GHB) cells in frac fluid at three conditions;
FIG. 6B shows biocide killing at 30°C of sessile General Heterotrophic Bacteria (GHB) cells in frac fluid at three conditions;
FIG. 6C shows biocide killing at 45°C of planktonic General Heterotrophic Bacteria (GHB) cells in produced water at three conditions;
FIG. 6D shows biocide killing at 45°C of sessile General Heterotrophic Bacteria (GHB) cells in produced water at three conditions;

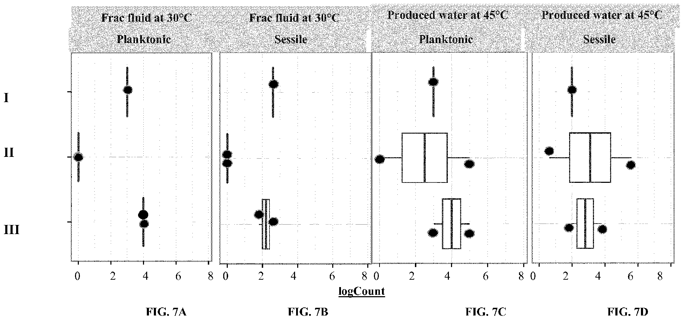

FIG. 7A shows biocide killing at 30°C of planktonic Sulfate Reducing Bacteria (SRB) cells in frac fluid at three conditions;
FIG. 7B shows biocide killing at 30°C of sessile Sulfate Reducing Bacteria (SRB) cells in frac fluid at three conditions;
FIG. 7C shows biocide killing at 45°C of planktonic Sulfate Reducing Bacteria (SRB) cells in produced water at three conditions;
FIG. 7D shows biocide killing at 45°C of sessile Sulfate Reducing Bacteria (SRB) cells in produced water at three conditions;

### DETAILED DESCRIPTION OF THE INVENTION

The present invention will now be described for purposes of illustration and not limitation. Except in the operating examples, or where otherwise indicated, all numbers expressing quantities, percentages, and so forth in the specification are to be understood as being modified in all instances by the term "about."

Any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicants reserve the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. §112(a), and 35 U.S.C. §132(a).

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicants reserve the right to amend this specification to expressly recite any subject matter, or portion thereof, incorporated by reference herein.

Reference throughout this specification to "various non-limiting embodiments," "certain embodiments," or the like, means that a particular feature or characteristic may be included in an embodiment. Thus, use of the phrase "in various non-limiting embodiments," "in certain embodiments," or the like, in this specification does not necessarily refer to a common embodiment, and may refer to different embodiments. Further, the particular features or characteristics may be combined in any suitable manner in one or more embodiments. Thus, the particular features or characteristics illustrated or described in connection with various or certain embodiments may be combined, in whole or in part, with the features or characteristics of one or more other embodiments without limitation. Such modifications and variations are intended to be included within the scope of the present specification.

The grammatical articles "a", "an", and "the", as used herein, are intended to include "at least one" or "one or more", unless otherwise indicated, even if "at least one" or "one or more" is expressly used in certain instances. Thus, these articles are used in this specification to refer to one or more than one (i.e., to "at least one") of the grammatical objects of the article. By way of example, and without limitation, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise. The present invention is directed generally to dispersion-coated proppants, methods for preparing such dispersion-coated proppants, and methods for using those proppants to ameliorate various conditions in the downhole environment, such as well-souring. The dispersion-coated proppants of the present invention contain functional chemicals, in the dispersion, that impart various desired properties to the proppants.

To define more clearly the terms and concepts disclosed herein, the following definitions are provided. To the extent that any definition or usage provided by any document incorporated herein by reference conflicts with the definition or usage provided herein, the definition or usage provided herein controls.

The terms "particle", "particulate", "particulate material" and the like, when unmodified, are used herein to indicate the base material which, when having a dispersion coating, forms a "proppant." For example, hydraulic fracturing (fracing) sand is a material that is often referred to in the art as a "proppant", but in this disclosure, it is referred to as a "particle." The terms "proppant", "proppant particle", "coated proppant", "adhered proppant", and the like, are reserved for dispersion-coated particles in accordance with the teachings of this invention.

The term "free-flowing" is used herein to mean that the proppant particles do not agglomerate appreciably, and generally remain as discrete, individual proppant particles. Proppants of the present invention are "free-flowing" at ambient conditions, i.e., at a temperature of about 20-25°C and at atmospheric pressure. The flowability of the solid particles can be measured using a test method such as the American Foundrymen's Society Procedure 227-87-S, entitled "Moldability of Molding Sand Mixtures" as found in the Mold & Core Test Handbook, 2nd edition (1989), which is incorporated herein by reference. Briefly, the test procedure involves placing a 200g sample of solid particles in a cylindrical 8-mesh screen of a rotary screen device driven by a 57 rpm motor. The screen was rotated for 10 sec. In accordance with this test, the moldability index is equal to the weight of the product passing through the screen divided by the original weight charged to the screen chamber (i.e., 200g). If all of the material passes through the screen, the moldability index is 100%. In accordance with the present invention, free-flowing proppants have a moldability index of greater than about 80% at ambient conditions. For instance, the proppants disclosed herein can have a moldability index greater than about 85%, or greater than about 90%. In some aspects of this invention, the coated proppants have a moldability index of greater than about 95%, or alternatively, greater than about 98%. Generally, solid materials that are not free-flowing have a moldability index of less than about 50%. Such materials can, in some cases, have a moldability index of less than about 40%, or less than about 25%.

Although any methods, devices, and materials similar or equivalent to those described herein can be used in the practice or testing of the invention, the typical methods, devices and materials are herein described.

Although compositions and methods are described in terms of "comprising" various components or steps, the compositions and methods can also "consist essentially of' or "consist of' the various components or steps.

The present invention is directed to dispersion-coated proppants, methods for preparing the coated proppants, and methods for using those proppant particles to alter various conditions within the well-bore. A coated proppant in accordance with one aspect of the present invention comprises (i) a particle, and (ii) a resin-containing dispersion adhered to the particle.

The coated particles of certain embodiments of the present invention can be prepared by any of a variety of processes, including batch, semi-continuous, or continuous processes. Batch, continuous mixers or in-line where the sand is effectively agitated sufficient to spread the dispersion onto the particle surface may be used to prepare the coated particles of some embodiments of the invention. Suitable methods of preparing the particles include, but are not limited to, spraying, slurrying, flooding, and simply adding solution to bulk proppant and stirring. Application temperatures may be from about 4.4°C (40°F) - the coating solution must be flowable but protected from freezing- up to as high as approximately 232.22°C (450°F). At temperatures above 100°C (212°F), i.e., the boiling point of water, the required contact time of the solution should be limited due to the rapid evolution of water from the mixture. At lower application temperatures, the dispersion-coated particle mixture requires longer drying times or the addition of heat to speed the drying process.

Various embodiments of the invention utilize a masterbatch in which a portion of the particles are coated with the resin-based, functional chemical containing dispersion at a higher concentration of functional chemical than is desired in the final material. These coated particles are then mixed with uncoated particles and the mixture used in the desired application. In this manner, for example, a smaller volume masterbatch of biocide containing polyurethane dispersion coated sand may be transported to an oil or gas well site where it may be mixed with a large volume of uncoated sand and introduced into a well bore. The mixing may optionally take place in stages so as to vary the concentration of biocide at different levels of the well bore as the sand is introduced into it.

The present invention is not limited to any specific type of particulate material for use as the proppant substrate (before providing the particle or particulate with the resin-containing dispersion material in accordance with the present invention), so long as the particle has sufficient strength to withstand the stresses, such as elevated temperature and pressure, often encountered in oil and gas recovery applications.

In one aspect of the present invention, the particle of the coated proppant is a sand, a naturally occurring mineral fiber, a ceramic, a bauxite, a glass, a metal bead, a walnut hull, a composite particle, and the like. For instance, the sand can be graded sand or a resin-coated sand. These dispersion coated sands can serve as particles in the present invention. A ceramic can include both porous and non-porous ceramic materials, and a bauxite can include sintered bauxite materials.

Composite particles are an agglomeration of smaller, fine particles held together by a binder, and such composite particles can be the particulate material in the present invention. Compositions containing dispersion coated proppants can employ mixtures or combinations of more than one type of particle, for instance, both a sand and a ceramic can be dispersion coated and then mixed to form a composition of proppants. It is contemplated that any particulate material suitable for use in proppant applications can be used in the present invention, regardless of the specific gravity of the particle, although it can be beneficial in certain applications to have a lower specific gravity to increase the distance that the proppants can be carried into a formation prior to settling.

In another aspect, the particle is either a porous ceramic or porous polymer particle. Such particles are described in, for example, U.S. Pat. Nos. 7,426,961 and 7,713,918, the disclosures of which are incorporated herein by reference in their entirety. These porous ceramic or porous polymer materials can be of natural origin or can be produced synthetically. Although the use of such materials is not limited by specific gravity, the specific gravity of these materials is generally less than about 3 g/cc, or less than about 2.7 g/cc. In another aspect, the specific gravity of the porous particle is less than about 2.5 g/cc, for example, less than about 2.2 g/cc.

The particle size of the particle used to produce the dispersion coated proppant of the present invention generally falls within a range from about 100 µm to about 3000 µm (about 3 mm). In another aspect, the particle size is from about 125 µm to about 2500 µm, from about 150 µm to about 2000 µm, or from about 175 µm to about 1500 µm. In yet another aspect, the particle of the coated proppant of the present invention has a particle size that falls within a narrower range of about 200 µm to about 1000 µm, for example, about 250 µm to about 800 µm, or from about 300 µm to about 700 µm.

In another aspect of this invention, the particles generally have a mesh size from about 8 and about 100, based on the U.S. Standard Sieve Series. For example, in a distribution of such particles which can be added to a treating fluid for use in a subterranean formation, at least about 90% by weight of the particles have a particle size falling within the range from about 8 to about 100 mesh. In accordance with another aspect of the present invention, at least about 95% by weight of the particles in a resin-containing dispersion-coated proppant composition have a size within the range from about 8 to about 100 mesh. Further, 90% by weight or more (e.g., 95% or more) of the particles in a dispersion-coated proppant composition can have a size within the 20 to 40 mesh range in another aspect of this invention.

In a different aspect, the particle in the dispersion-coated proppant has a size in the range from about 8 to about 140 mesh, from 10 to about 120 mesh, from about 10 to about 100 mesh, or from about 14 to about 80 mesh. In other aspects of this invention, the particle is in a range from about 18 to about 60 mesh, or from about 20 mesh to about 40 mesh. In another aspect, there is less than about 10% by weight, for example, 5% by weight of less, of particles in a coated proppant composition having a size of less than about 20 mesh or greater than about 50 mesh.

The proppants of the present invention generally comprise particles which are not limited to any particular material or size.

The coated particles described herein can be used in a variety of applications including, for example, use as a component of a coating, adhesive, or sealant composition, in which the coated particles are dispersed in a binder resin, such as any binder resin known to those skilled in the art of such compositions.

In certain embodiments, however, the coated particles of the present invention are thought to be particularly suitable for use in hydraulic fracturing a geologic formation. In these embodiments, the coated particles may be combined with a carrier fluid, such as water and/or a hydrocarbon, and the mixture injected at elevated pressure into a well bore to an underground geologic formation. When the pressure in the formation resulting from the injection exceeds the strength of the formation, a fracture is formed and the coated particles, i.e., proppant, are placed in the formation in an effort to maintain the fracture in a propped open position when the injection pressure is released. Upon ceasing the injection of fluid, it is desired that the proppant forms a pack that serves to hold open the fractures and providing a highly conductive channel through which a desired material, such as water, oil, or gas (including natural gas) can flow to the well bore for retrieval.

In certain embodiments, therefore, the coated particles are used in a method of forming a proppant composition that includes suspending the particles described herein in a carrier fluid to form a suspension and injecting the suspension into an underground geologic formation. The suspended particles will provide a slow release of functional chemical(s) which are adhered to the proppant.

The coated particles described herein can be injected as the sole proppant or as a partial replacement for an existing proppant. For example, if desired, the coated particles described herein may comprises 1 to 99 percent by weight, such as 10 to 90 percent by weight, or, in some cases, 10 to 50 percent by weight, based on the total weight of the proppant present in the composition that is injected into the well bore. In some embodiments, an uncoated proppant is first placed in a well, and thereafter a proppant of the coated particles described herein is placed in the fracture nearest to the wellbore or fracture openings.

The coated particles of the present invention are presently thought to provide several advantages, particularly in the context of hydraulic fracturing. Depending on the functional chemical adhered to the proppant by the resin-containing dispersion, the proppant may have anti-microbial properties, dispersant properties, corrosion inhibiting properties, hydrogen sulfide scavenging properties, gelling properties, and/or scale inhibiting properties, among others.

As used herein, the term "coating" refers to a set of chemical components that may be mixed to form an active coating composition that may be applied and cured to form a coating. As used herein, the term "coating composition" refers to a mixture of chemical components that will dry by eliminating water and/or co-solvent. Accordingly, a coating composition may be formed from a coating system by mixing the chemical components comprising the coating system. Furthermore, when a list of constituents is provided herein that are individually suitable for forming the components of the coating system or coating composition discussed herein, it should be understood that various combinations of two or more of those constituents, combined in a manner that would be known to those of ordinary skill in the art reading the present specification, may be employed and is contemplated.

As used herein, the term "polyurethane" refers to polymeric or oligomeric materials comprising urethane groups, urea groups, or both. Accordingly, as used herein, the term "polyurethane" is synonymous with the terms polyurea, poly(urethane/urea), and modifications thereof. The term "polyurethane" also refers to crosslinked polymer networks in which the crosslinks comprise urethane and/or urea linkages, and/or the constituent polymer chains comprise urethane and/or urea linkages. Carbodiimide crosslinking as is known to those skilled in the art is also contemplated in the dispersion coated proppants of the invention.

As used herein, the term "dispersion" refers to a composition comprising a discontinuous phase distributed throughout a continuous phase. For example, "waterborne dispersion" and "aqueous dispersion" refer to compositions comprising particles or solutes distributed throughout liquid water. Waterborne dispersions and aqueous dispersions may also include one or more co-solvents in addition to the particles or solutes and water. As used herein, the term "dispersion" includes, for example, colloids, emulsions, suspensions, sols, solutions (i.e., molecular or ionic dispersions), and the like. The resin-containing dispersion in the present invention may be applied at 0.05 wt.% to 10.0 wt.% resin solids based on the weight of the proppant.

In certain embodiments, the thickness of the resin-containing dispersion coating on the particle (substrate) is 200 nm to 450 nm. In other embodiments, the thickness is 221 nm to 441 nm.

As used herein, the term "polyisocyanate" refers to compounds comprising at least two free isocyanate groups. Polyisocyanates include diisocyanates and diisocyanate reaction products comprising, for example, biuret, isocyanurate, uretdione, urethane, urea, iminooxadiazine dione, oxadiazine trione, carbodiimide, acyl urea, and/or allophanate groups.

As used herein, the term "polyol" refers to compounds comprising at least two free hydroxy groups. Polyols include polymers comprising pendant and/or terminal hydroxy groups. As used herein, the term "polyamine" refers to compounds comprising at least two free amine groups. Polyamines include polymers comprising pendant and/or terminal amine groups.

Water-dispersible polyisocyanates include polyisocyanates that may form an aqueous dispersion with the aid of organic co-solvents, protective colloids, and/or external emulsifiers under high shear conditions. Water-dispersible polyisocyanates also include polyisocyanates that are hydrophilically-modified with covalently linked internal emulsifiers.

The polyisocyanate useful in the present invention may comprise any organic polyisocyanates having aliphatically, cycloaliphatically, araliphatically, and/or aromatically bound free isocyanate groups, which are liquid at room temperature or are dispersed in a solvent or solvent mixture at room temperature. In various embodiments, the polyisocyanate may have a viscosity of from 10-15000 mPa.s at 23°C, 10-5000 mPa.s at 23°C, or 50-1000 mPa.s at 23°C. In some embodiments, the polyisocyanate may comprise polyisocyanates or polyisocyanate mixtures having exclusively aliphatically and/or cycloaliphatically bound isocyanate groups with an (average) NCO functionality of 2.0-5.0 and a viscosity of from 10-5000 mPa·s at 23°C, 50-1000 mPa·s at 23°C, or 100-1000 mPa·s at 23°C.

In certain embodiments, the polyisocyanate may comprise polyisocyanates or polyisocyanate mixtures based on one or more aliphatic or cycloaliphatic diisocyanates, such as, for example, ethylene diisocyanate; 1,4-tetramethylene diisocyanate; 1,6-hexamethylene diisocyanate (HDI); 2,2,4-trimethyl-1,6-hexamethylene diisocyanate; 1,12-dodecamethylene diisocyanate; 1-isocyanato-3-isocyanatomethyl-3,5,5-trimethyl-cyclohexane (isophorone diisocyanate or IPDI); bis-(4-isocyanatocyclohexyl)methane (H₁₂MDI); cyclohexane 1,4-diisocyanate; bis-(4-isocyanato-3-methyl-cyclohexyl)methane; PDI (pentane diisocyanate - bio-based) isomers of any thereof; m-xylylene diisocyanate (XDI) or combinations of any thereof. In various embodiments, the polyisocyanate component may comprise polyisocyanates or polyisocyanate mixtures based on one or more aromatic diisocyanates, such as, for example, benzene diisocyanate; toluene diisocyanate (TDI); diphenylmethane diisocyanate (MDI); isomers of any thereof; or combinations of any thereof. In various embodiments, the polyisocyanate component may comprise a triisocyanate, such as, for example, 4-isocyanatomethyl-1,8-octane diisocyanate (triisocyanatononane or TIN); isomers thereof; or derivatives thereof.

Additional polyisocyanates (including various diisocyanates) that may find utility in the polyurethane dispersion useful in the present invention may include the polyisocyanates described in U.S. Pat. Nos. 5,075,370; 5,304,400; 5,252,696; 5,750,613; and 7,205,356, each of which is incorporated by reference herein. Combinations of any of the above-identified and incorporated polyisocyanates may also be used to form a polyurethane dispersion useful herein.

The di- and tri-isocyanates indicated may be used as such, or as derivative polyisocyanates comprising biuret, isocyanurate, uretdione, urethane, urea, iminooxadiazine dione, oxadiazine trione, carbodiimide, acyl urea, and/or allophanate groups. In various embodiments, derivative polyisocyanates comprising biuret, isocyanurate, uretdione, urethane, iminooxadiazine dione, oxadiazine trione, carbodiimide, acyl urea, and/or allophanate groups are included in the polyisocyanate coating. In various embodiments, the polyisocyanate component comprises one or more of the above-identified structural groups prepared from IPDI, HDI, H₁₂MDI, and/or cyclohexane 1,4-diisocyanate.

The polyisocyanate may be hydrophilically-modified to be water-dispersible. Hydrophilically-modified water-dispersible polyisocyanates are obtainable, for example, by covalent modification with an internal emulsifier comprising anionic, cationic, or nonionic groups.

Polyether urethane type water-dispersible polyisocyanates may be formed, for example, from a reaction between polyisocyanates and less than stoichiometric amounts of monohydric polyalkylene oxide polyether alcohols. The preparation of such hydrophilically-modified polyisocyanates is described, for example, in U.S. Pat. No. 5,252,696, which is incorporated by reference herein. Polyether allophanate type water-dispersible polyisocyanates may be formed, for example, from a reaction between a polyalkylene oxide polyether alcohol and two polyisocyanate molecules under allophanation conditions. The preparation of such hydrophilically-modified polyisocyanates is described, for example, in U.S. Pat. No. 6,426,414, which is incorporated by reference herein. The polyalkylene oxide polyether alcohol used to prepare polyether type hydrophilically-modified water-dispersible polyisocyanates may comprise, for example, polyethylene oxide residues and/or polypropylene oxide residues.

Polyisocyanates may also be covalently modified with ionic or potentially ionic internal emulsifying groups to form hydrophilically-modified water-dispersible polyisocyanates. The ionic or potentially ionic groups may be cationic or anionic. As used herein, the term "ionic or potentially ionic group" refers to a chemical group that is nonionic under certain conditions and ionic under certain other conditions. For example, in various embodiments, the ionic group or potentially ionic group may comprise a carboxylic acid group; a carboxylate group; a sulfonic acid group; a sulfonate group; a phosphonic acid group; a phosphonate group; or combinations of any thereof. In this regard, for example, carboxylic acid groups, sulfonic acid groups, and phosphonic acid groups are potentially ionic groups, whereas, carboxylate groups, sulfonate groups, and phosphonate groups are ionic groups in the form of a salt, such as, for example, a sodium salt.

For example, carboxylate (carboxylic acid) groups, sulfonate (sulfonic acid) groups, or phosphonate (phosphonic acid) groups may be covalently introduced into polyisocyanates to form hydrophilically-modified water-dispersible polyisocyanates. The ionic or potentially ionic groups may be introduced through a reaction between the isocyanate groups of the polyisocyanate and less than stoichiometric amounts of amino-functional or hydroxy-functional carboxylic acids, sulfonic acids, phosphonic acids, or salts thereof. Examples include, but are not limited to dimethylolpropionic acid (DMPA), N-(2-aminoethyl)-2-aminoethane sulfonic acid (AAS); N-(2-aminoethyl)-2-aminopropionic acid; 2-(cyclohexyl-amino)-ethane sulfonic acid; 3-(cyclohexyl-amino)-1-propane sulfonic acid (CAPS); 2-aminoethylphosphonic acid; or the salts thereof.

If free carboxylic acids, sulfonic acids, or phosphonic acids are incorporated in the polyisocyanate, then the acids may be neutralized with a neutralizing agent, such as, for example, tertiary amines, including, but not limited to, trialkyl-substituted tertiary amines. The preparation of hydrophilically-modified water-dispersible polyisocyanates is described, for example, in U.S. Pat. No. 6,767,958, which is incorporated by reference herein. Water-dispersible polyisocyanate mixtures based on triisocyanatononane (TIN) are described in International Patent Application Publication No. WO01/62819, which is incorporated by reference herein.

The NCO content of nonionic type hydrophilically-modified water-dispersible polyisocyanates may be from 5 to 25 weight percent of the polyisocyanate molecule. The NCO content of ionic type hydrophilically-modified water-dispersible polyisocyanates may be from 4 to 26 weight percent of the polyisocyanate molecule.

The polyisocyanates may also be partially blocked with compounds that are reversibly reactive with isocyanate groups. Suitable blocking agents for polyisocyanates include, for example, monohydric alcohols such as methanol, ethanol, butanol, hexanol, cyclohexanol, benzyl alcohol, oximes such as acetoxime, methyl ethyl ketoxime, cyclohexanone oxime, lactams such as ε-caprolactam, phenols, amines such as diisopropylamine or dibutylamine, dimethylpyrazole or triazole, as well as malonic acid dimethyl ester, malonic acid diethyl ester or malonic acid dibutyl ester.

In various embodiments, functional chemicals are included in the proppant coating. Such functional chemicals include, but are not limited to, demulsifiers, emulsifiers, corrosion inhibitors, dispersants, filtrate reducers, water clarifiers / deoilers, fluid-loss additives, flocculants, foaming agents, defoaming agents, scale inhibitors, shale control inhibitors, viscosifiers, thinners, wax inhibitors, asphaltene inhibitors, hydrate inhibitors, biocides, rheology modifiers, trace/tagging agents, co-surfactants, co-solvents, H₂S scavengers, ion exchange resins, cement gas blocking agents, cement retarders, de-watering additives, bentonite extenders, friction reducers, gelling agents, gel breakers, iron control additives, clay stabilizers, and iron sulfide dissolvers.

In some embodiments, demulsifiers are used to separate emulsions and include but are not limited to, acid catalyzed phenol-formaldehyde resins, base catalyzed phenol-formaldehyde resins, epoxy resins, polyethyleneimines, polyamines, di-epoxides, polyols, and dendrimers soap, naphthenic acid salts and alkyl aryl sulphonate, sulphated castor oil petroleum sulphonates, derivatives of sulpho-acid oxidized castor oil and sulphosuccinic acid ester, fatty acids, fatty alcohols, alkylphenols, ethylene oxide, propylene oxide copolymer, alkoxylated cyclic p-alkylphenol formaldehyde resins, amine alkoxylate, alkoxylated cyclic p-alkylphenol formaldehyde resins, polyesteramine and blends.

In various embodiment, emulsifiers have molecules which consist of both a hydrophilic and a lipophilic part, allowing them to be surface-active and include, but are not limited to, calcium fatty-acid soaps made from various fatty acids and lime, or derivatives such as amides, amines, amidoamines and imidazolines made by reactions of fatty acids and various ethanolamine compounds.

In certain embodiments, a corrosion inhibitor may be adhered to the proppant. Corrosion inhibitors are film-forming surfactants that form water-impermeable barriers on metal surfaces and include, but are not limited to, corrosion inhibitors include, but are not limited to quaternary ammonium salts such as chloride, bromides, iodides, dimethylsulfates, diethylsulfates, nitrites, bicarbonates, carbonates, hydroxides, alkoxides, or the like, or mixtures or combinations thereof; salts of nitrogen bases; or mixtures or combinations thereof.

In various embodiments, dispersants may be adhered to the proppant. Dispersants include, but are not limited to, complexes of tetravalent zirconium and ligands selected from organic acids such as citric, tartaric, malic, and lactic and a complex of aluminum and citric acid. A mixture of sulfonated styrene-maleic anhydride copolymer and polymers prepared from acrylic acid or acrylamide and their derivatives.

In some embodiments, the proppant coating includes filtrate reducers. Suitable filtrate reducers include, but are not limited to, bentonite, various manufactured polymers, starches, and thinners or deflocculants.

In various embodiments, water clarifiers and/or deoilers may be included. Water clarifiers / deoilers describe compounds which are applied to break emulsions and separate the oil phase from the water, thereby, making the water "clearer" such as cationic polyamines.

Some embodiments of the present invention include fluid-loss additives. Fluid-loss additives include, but are not limited to, starches, calcium carbonate-starch mixtures, guar gum, gum acacia, alginates, biopolymers, polyglycolic acids, polylactic acids, and mixtures thereof.

In various embodiments, flocculants may be coated on the proppant. Suitable flocculants include, but are not limited to, salt, hydrated lime, gypsum (hydrated calcium sulfate), and synthetic polymers. Guar gum and some acrylic polymers are also very effective flocculants when used in low concentrations.

In certain embodiments of the present invention, foaming agents may be included. Foaming agents include suitable sodium salts of α-olefin sulfonates (AOSs), including, without limitation, any α-olefin sulfonate. Preferred AOSs including short chain α-olefin sulfonates having between about 2 and about 10 carbon atoms, particularly, between 4 and 10 carbon atoms, longer chain α-olefin sulfonates having between about 10 and about 24 carbon atoms, particularly, between about 10 and 16 carbon atoms or mixtures or combinations thereof.

In other embodiments, defoaming agents may be adhered to the proppant. Suitable defoaming agents include, but are not limited to, insoluble oils, polydimethylsiloxanes and other silicones, certain alcohols, stearates and glycols.

Certain embodiments may add a scale inhibitor to the proppant coating. Scale inhibitors including chelating agents, may be Na, K or NH₄ ⁺ salts of EDTA (ethylenediaminetetraacetic acid); Na, K or NH₄ ⁺ salts of NTA (nitrilotriacetic acid); Na, K or NH₄ ⁺ salts of erythorbic acid; Na, K or NH₄ ⁺ salts of thioglycolic acid (TGA); Na, K or NH₄ ⁺ salts of hydroxy acetic acid; Na, K or NH₄ ⁺ salts of citric acid; Na, K or NH₄ ⁺ salts of tartaric acid or other similar salts or mixtures or combinations thereof. Phosphates, e.g., sodium hexamethylphosphate, linear phosphate salts, salts of polyphosphoric acid, phosphonates, e.g., nonionic such as HEDP (hydroxythylidene diphosphoric acid), PBTC (phosphoisobutane, tricarboxylic acid), amino phosphonates of: MEA (monoethanolamine), NH₃, EDA (ethylene diamine), bishydroxyethylene diamine, bisaminoethylether, DETA (diethylenetriamine), HMDA (hexamethylene diamine), hyper homologues and isomers of HMDA, polyamines of EDA and DETA, diglycolamine and homologues, or similar polyamines or mixtures or combinations thereof; phosphate esters, e.g., polyphosphoric acid esters or phosphorus pentoxide (P₂O₅) esters of: alkanol amines such as MEA, DEA, triethanol amine (TEA), bishydroxyethylethylene diamine; ethoxylated alcohols, glycerin, glycols such as EG (ethylene glycol), propylene glycol, butylene glycol, hexylene glycol, trimethylol propane, pentaerythritol, neopentyl glycol or the like; tris & tetrahydroxy amines; ethoxylated alkyl phenols (limited use due to toxicity problems), ethoxylated amines such as monoamines such as MDEA and higher amines from 2 to 24 carbons atoms, diamines 2 to 24 carbons carbon atoms, or the like; polymers, e.g., homopolymers of aspartic acid, soluble homopolymers of acrylic acid, copolymers of acrylic acid and methacrylic acid, terpolymers of acrylates, AMPS, etc., hydrolyzed polyacrylamides, polymalic anhydride (PMA); or the like; or mixtures or combinations thereof.

In various embodiments, the proppant coating may include shale control inhibitors. Suitable shale control inhibitors include, but are not limited to, potassium chloride, potassium formate and anionic polymers/co-polymers.

In some embodiments of the present invention the coating may include a viscosifier. Viscosifiers improve the ability of a drilling fluid to remove cuttings from the wellbore and to suspend cuttings and weight materials during periods of noncirculation. Suitable viscosifiers for use in the present invention include, but are not limited to, bentonite (sodium/calcium aluminosilicate), sepiolite (hydrous magnesium silicate), attapulgite (hydrous magnesium aluminum silicate), and organophilic clays.

In certain embodiments, the proppant coating may include a thinner. Suitable thinners include, but are not limited to, plant tannins, phosphates, modified lignosulfonates; and low-molecular-weight synthetic water-soluble polymers.

In various embodiments, the proppant coating may include a wax inhibitor. Suitable wax inhibitors include, but are not limited to, styrene ester copolymers and terpolymers, esters, novalacs, polyalkylated phenol, and fumerate-vinyl acetate copolymers.

Suitable asphaltene inhibitors include, but are not limited to, alkylphenol/aldehyde resins and sulfonated variants of these resins; polyolefin esters, amides, or imides with alkyl, alkylene phenyl, or alkylene pyridyl functional groups; alkenyl/vinylpyrolidone copolymers; graft polymers of polyolefins with maleic anhydride or vinylimidazole; hyperbranched polyesterimides; lignosulfonates; and polyalkoxylated asphaltenes.

Various embodiments of the present invention include hydrate inhibitors in the proppant coating. Suitable hydrate inhibitors include, but are not limited to, alkylated ammonium compounds, alkylated phosphonium compounds, alkylated sulfonium compounds, or any combination thereof. In some embodiments, the coating comprises tetrabutylammonium bromide. Water soluble polymers or copolymers of acrylamide, n-vinylamide maleimide, vinyllactam maleamide, alkenyl cyclic imino ether maleimide or other such polymers can also be used. Examples of hydrate anti-agglomerates include, but are not limited to, dodecyl-2-(2-caprolactamyl) ethanamide.

In certain embodiments of the present invention, a biocide is included in the proppant coating. Biocides are often used at low concentrations in the hydraulic fracturing fluid mixtures, at a level of about 0.001 % in the fracturing fluid, which corresponds to approximately 0.01% of the total proppant weight. Microorganisms can have a significant economic impact on the health and productivity of a well. For example, unchecked bacteria growth can result in "souring" of wells, where the bacteria produces hydrogen sulfide as a waste product of their metabolic function. Such sour gases in the produced fluids are highly undesirable and can be a source for corrosion in the production equipment as well as a cost for sulfur removal from the produced hydrocarbons.

Biocides can be divided into two types, non-oxidating and oxidating. Non-oxidating biocides include, but are not limited to, aldehydes, quaternary phosphonium compounds, quaternary ammonium surfactants, cationic polymers, organic bromides, metronidazole, isothiazolones, isothiazolinones, thiones, organic thiocyanates, phenolics, alkylamines, diamines, triamines, dithiocarbamates, 2-(decylthio)ethanamine (DTEA) and its hydrochloride, and triazine derivatives.

Oxidating biocides include, but are not limited to, hypochlorite and hypobromite salts, stabilized bromine chloride, hydroxyl radicals, chloramines, chlorine dioxide, chloroisocyanurates, halogen-containing hydantoins, and hydrogen peroxide and peracetic acid.

Exemplary biocidal agents include, but are not limited to: 2,2-dibromo-3-nitrilopropionamide (CAS 10222-01-2); magnesium nitrate (CAS 10377-60-3); glutaraldehyde (CAS 111-30-8); 2-bromo-2-cyanoacetamide (CAS 1113-55-9); caprylic alcohol (CAS 111-87-5); triethylene glycol (CAS 112-27-6); sodium dodecyl diphenyl ether disulfonate (CAS 119345-04-9); 2-amino-2-methyl-1-propanol (CAS 124-68-5); ethelenediaminetetraacetate (CAS 150-38-9); 5-chloro-2-methyl-4-isothiazolin-3-one (CAS 26172-55-4); benzisothiazolinone and other isothiazolinones (CAS 2634-33-5); ethoxylated oleylamine (CAS 26635-93-8); 2-methyl-4-isothiazolin-3-one (CAS 2682-20-4); formaldehyde (CAS 30846-35-6); dibromoacetonitrile (CAS 3252-43-5); dimethyl oxazolidine (CAS 51200-87-4); 2-bromo-2-nitro-1,3-propanediol (CAS 52-51-7); tetrahydro-3, 5-dimethyl-2h-1,3,5-thia (CAS 533-73-2); 3,5-dimethyltetrahydro-1,3,5-thiadiazine-2-thione (CAS 533-74-4); tetrakis hydroxymethyl-phosphonium sulfate (CAS 55566-30-8); formaldehyde amine (CAS 56652-26-7); quaternary ammonium chloride (CAS 61789-71-1); C₆-C₁₂ ethoxylated alcohols (CAS 68002-97-1); benzalkonium chloride (CAS 68424-85-1); C₁₂-C₁₄ ethoxylated alcohols (CAS 68439-50-9); C₁₂-C₁₆ ethoxylated alcohols (CAS 68551-12-2); oxydiethylene bis(alkyldimethyl ammonium chloride) (CAS 68607-28-3); didecyl dimethyl ammonium chloride (CAS 7173-51-5); 3,4,4-trimethyl oxazolidine (CAS 75673-43-7); cetylethylmorpholinium ethyl sulfate (CAS 78-21-7); and tributyltetradecylphosphonium chloride (CAS 81741-28-8), or any combination thereof.

Copper halide-based antimicrobial, such as those from Agienic Inc., are particularly preferred in the present invention, although halides of zinc, silver and their alloys also are suitable as biocides. Preferred antimicrobials include copper(I) iodide; copper(I) chloride; and copper(I) bromide as well as copper(I) acetate; copper(I) sulfide; copper(I) thiocyanate, and copper oxide.

Various embodiments of the invention include rheology modifiers in the proppant coating. Synthetic rheology modifier polymers fall within one of four categories: alkali-soluble emulsion ("ASE") polymers, hydrophobically-modified alkali-soluble emulsion ("HASE") polymers, hydrophobically-modified ethoxylated urethane ("HEUR") polymers, and hydrophobically-modified nonionic polyol ("HNP") polymers. HASE are typically low viscosity emulsions at low pH levels. To increase viscosity, the emulsion is neutralized to pH above 7, preferably above 8. When it is neutralized, HASE swells and viscosifies. The hydrophobic modifications, for example, the terpene alkoxylate components acting like stickers and the acrylate-based extended hydrophilic brushes are responsible for creating the swollen three dimensional structure as viscous gels. HASE and ASE polymers, such as those described in, U.S. Pat. Nos. 3,035,004; 5,292,843; 6,897,253; 7,288,616; 7,378,479, and US Published Patent Application No. 2006/0270563, are suitable rheology modifiers in the present invention.

Trace/tagging agents may be added to the proppant coating in some embodiments of the invention and include, but are not limited to, dyes, fluorescer or other chemicals which can be detected using spectroscopic analytical methods such as UV-visible, fluorescence or phosphorescence. Compounds of lanthanide elements may be used as tracers because they have distinctive spectra. A tracer may be a chemical with distinctive features which enables it to be distinguished by another analytical technique such as GC-MS. Such chemicals include fluorocarbons and fluoro-substituted aromatic acids. Radio-isotopes may be used as tracers. Salts of ions which do not occur naturally in subterranean reservoirs, such as iodides and thiocyanates may also be used as a tracer.

Various embodiments of the invention include co-surfactants in the coating composition. Co-surfactants include, but are not limited to, sodium dodecylbenzene sulfonate (SDBS), those having a SDBS-like structure having a saturated or unsaturated, branched or straight-chained C₆ to C₁₆ chain; further examples of this type of co-surfactant are those having a saturated or unsaturated, branched or straight-chained C₈ to C₁₆ chain. Other suitable examples of this type of co-surfactant, are certain chelating agents such as trisodium hydroxyethylethylenediamine triacetate.

Some embodiments of the present invention include co-solvents in the proppant coating. Co-solvents include, but are not limited to, short chain alkyl alcohols and glycols and combinations thereof. In some embodiments, the co-solvents comprise methanol, ethanol, isopropanol, 1,2-pentanediol, propylene glycol, and triethylene glycol and/or combinations thereof.

Hydrogen sulfide is a toxic chemical that is also corrosive to metals. The presence of hydrogen sulfide in hydrocarbon reservoirs raises the cost of production, transportation and refining due to increased safety and corrosion prevention requirements. Depending on the concentration of hydrogen sulfide in the fractured reservoir, the concentrations of the scavengers in the proppant coating can be varied to remove more or less hydrogen sulfide. In sufficient volume, proppants with sulfide scavenging capabilities can reduce the concentration from levels that pose safety hazards (in the range of 500-1000 ppm) to levels where the sulfides are only a nuisance (1-20 ppm). If the surface area of the proppants is high and dispersion of the scavengers is good, high efficiencies in hydrogen sulfide reaction and removal are possible. Suitable H₂S scavengers include, but are not limited to, copper carbonate (CuCO₃), zinc oxide (ZnO), ferric oxide (Fe₂O₃), solid permanganates, quinones, benzoquinone, napthoquinones, agents containing quinone functional groups, such as chloranil, 2,3-dichloro-5,6-dicyanobenzoquinone, anthroquinone, and the like, or any combination thereof.

Certain embodiments of the present invention include an ion exchange resin in the proppant coating. Synthetic ion exchange resins are often a crosslinked polymer network to which are attached ionized or ionizable groups. In the case of cation exchange resins, these groups are acidic groups (e.g., --SO₃H, --PO₃H₂,-CO₂M, and phenolic hydroxyl) whereas in anion exchange resins the groups are basic in character (e.g., quaternary ammonium, aliphatic or aromatic amine groups). In the synthesis of ion exchange resins, the ionizable and contaminant removal functional groups may be attached to the monomers or intermediates used in preparation of the crosslinked polymer, or they may be introduced subsequently into a preformed polymer. As those skilled in the art are aware such are examples only and other anionic and cationic resins can be used.

Certain embodiments of the inventive proppant coating include cement gas blocking agents to prevent gas channeling and include, but are not limited to BASOBLOCK styrene-butadiene lattices and PARAGAS which is a modified polyethylenimine, both from BASF, and GAS-CHEK from Halliburton.

Various embodiments of the invention may contain a cement retarder in the proppant coating. A cement retarder is a chemical used to increase the thickening time of a cement composition. Suitable cement retarders include, but are not limited to, saccharide compounds, polysaccharides organophosphates (such as alkylene phosphonic acids), inorganic compounds (such as acids and accompanying salts, sodium chloride, and oxides of zinc and lead).

Certain embodiments of the proppant coating of the invention include de-watering additives. De-watering additives include, but are not limited to, polyacrylamide and polyacrylate polymers and copolymers.

Bentonite extenders are included in the inventive proppant coating in some embodiments and can be either salts or polymers which enhance viscosity buildup by slightly flocculating the bentonite suspension. Sodium carbonate is an example of a salt that can be added as an extender. More effective extenders than inorganic salts are the high molecular weight linear polymers.

Certain embodiments of the inventive proppant coating contain friction reducers. Friction reducers include, but are not limited to, polyacrylamide and polyacrylate polymers and copolymers at low concentrations for all temperatures ranges.

Various embodiments of the invention include one or more gelling agents in the proppant coating. Gelling agents include, but are not limited to, guar gums, hydroxypropyl guar, carboxymethyl hydroxypropyl guar, carboxymethyl guar, and carboxymethyl hydroxyethyl cellulose. Suitable hydratable polymers may also include synthetic polymers, such as polyvinyl alcohol, polyacrylamides, poly-2-amino-2-methyl propane sulfonic acid, and various other synthetic polymers and copolymers. Other examples of such polymer include, without limitation, guar gums, high-molecular weight polysaccharides composed of mannose and galactose sugars, or guar derivatives such as hydropropyl guar (HPG), carboxymethyl guar (CMG), carboxymethylhydropropyl guar (CMHPG), hydroxyethylcellulose (HEC), hydroxypropylcellulose (HPC), carboxymethylhydroxyethylcellulose (CMHEC), xanthan, scleroglucan, polyacrylamide, polyacrylate polymers and copolymers.

Some embodiments of the proppant coating of the present invention include a gel breaker. Gel breakers are either oxidants or enzymes which operate to degrade the polymeric gel structure. Most degradation or "breaking" is caused by oxidizing agents, such as persulfate salts (used either as is or encapsulated), chromous salts, organic peroxides or alkaline earth or zinc peroxide salts, or by enzymes.

Certain embodiments of the proppant coating of the present invention contain an iron control agent. Suitable iron control agents for use in accordance with the present disclosure include but are not limited to those available from Halliburton Energy Services, Duncan, Okla., and include: FE-2 Iron sequestering agent, FE-2A Buffering agent, FE-3 Iron control agent, FE-3A Iron control agent, FE-5A Iron control agent, FERCHEK Ferric iron inhibitor, FERCHEK A reducing agent, and FERCHEK SC Iron control system. Other suitable iron control agents include those described in U.S. Pat. Nos. 6,315,045, 6,525,011, 6,534,448, and 6,706,668, the relevant disclosures of which are hereby incorporated by reference.

Other suitable iron control agents for use in accordance with the present invention include chelating agents, such as TRILON-B SP (available from BASF), an organic chelating agent, as well as other, similar chelating agents, including nitrilotri-acetate (NTA), tetrasodium ethylenediaminetetraacetate (EDTA), HEDTA, and DTPA, preferably EDTA (1-50 wt. %), as well as biodegradable chelating agents such as methyl glycine diacetic acid (MGDA, available as TRILON M), sodium glucoheptonate (Burco BSGH400), disodium hydroxymethyl-iminodiacetic acid (XUS 40855.01), imino disuccinic acid (BAYPURE CX 100/34 or BAYPURE CX 100 Solid G), EDDS ([S,S]-ethylenediamine-N,N'-disuccinic acid) (OCTAQUEST A65 or OCTAQUES t E30), citric acid, glycolic acid and lactic acid.

Other suitable iron control agents for use with the present invention include a number of organic acids, including ascorbic acid, erythorbic acid, and alkali metal salts thereof, complexing agents of the soluble forms of iron, such as the aminopolycarboxylic acid derivatives, citric acid, acetic acid or salicylic acid, and triethanolamine.

In various embodiments, the proppant coating may comprise a clay stabilizer. Suitable clay stabilizers include, but are not limited to, flax seed gum and up to 10,000 ppm of potassium or ammonium cations, the use of an acid salt of alkaline esters, the use of aliphatic hydroxy acids with between 2-6 carbon atoms, cationic allyl ammonium halide salts, poly allyl ammonium halide salts, polyols containing at least 1 nitrogen atom preferably from a diamine, primary diamine salt with a chain length of 8 or less, quaternized trihydroxyalkylamines or choline derivatives, and quaternary amine-based cationic polyelectrolyte and salts. The cation of the salts may be a divalent salt cation, a choline cation, or certain N-substituted quaternary ammonium salt cations.

Some embodiments of the proppant coating may include an iron sulfide dissolver. Using a strong acid is the simplest way to dissolve an iron sulfide deposit, but using a strong acid generates large volumes of highly toxic H₂S gas, which is an undesirable by-product. Including an oxidizing agent may avoid such toxicity hazards but produces oxidation products, including elemental sulfur which is corrosive to pipes. Another agent for treating such deposits is acrolein, but it also has health, safety and environmental problems. Tris(hydroxymethyl) phosphine has been found to be an effective chemical for removing iron sulfide deposits.

In addition to the dispersion, the coating composition may include other desired additives or auxiliaries. Suitable additives and auxiliaries include, but are not limited to, fillers, wetting agents, thickeners, surfactants, and colorants.

Although primarily exemplified herein in connection with polyurethane dispersions and blends containing polyurethane dispersions, the present invention is not intended to be so limited. The present invention also encompasses acrylate dispersions and styrene butadiene rubber ("SBR") latex dispersions as the resin-containing dispersion, either alone or in combination with one or more polyurethane dispersions.

The resin-containing dispersion-coated proppants of the present invention may be added to a fracing fluid to create a slurry which is introduced into the downhole formation via a pump. Fracing fluids are known in the art and depending on the particular application, known fracing fluids may contain water and different types of additives, e.g., including hydrochloric acid, friction reducers, guar gum, emulsion breakers, and emulsifiers. Exemplary fracing fluids may be found in U.S. Pat. Nos. 8,215,164; 8,273,320 and 8,568,573, which are hereby incorporated by reference.

The resin-containing dispersion coated proppants of the present invention may be introduced into the downhole formation via a pump. The pump may be a high pressure pump in some embodiments. As used herein, the term "high pressure pump" means a pump that is capable of delivering a fluid downhole at a pressure of about 1000 psi (6.89 MPa) or greater. A high pressure pump may be used to introduce the fluids to a subterranean formation at or above a fracture gradient of the subterranean formation, but it may also be used in cases where fracturing is not desired. In some embodiments, the high pressure pump may be capable of fluidly conveying particulate matter, such as the proppant described in the embodiments herein, into the subterranean formation. Suitable high pressure pumps will be known to those skilled in the art and may include, but are not limited to, floating piston pumps and positive displacement pumps.

In certain embodiments, the pump may be a low pressure pump. As used herein, the term "low pressure pump" means a pump that operates at a pressure of about 1000 psi (6.89 MPa) or less. In some embodiments, the low pressure pump may be configured to convey the fluids to the high pressure pump. In such embodiments, the low pressure pump may "step up" the pressure of the treatment fluids before reaching the high pressure pump.

In certain embodiments, the systems described herein can further comprise a mixing tank that is upstream of the pump and in which the fluids are formulated. In various embodiments, the pump (e.g., a low pressure pump, a high pressure pump, or a combination thereof) may convey the fluids from the mixing tank or other source of the fluids to the well. In other embodiments, however, the fluids may be formulated offsite and transported to a worksite, in which case the fluid may be introduced to the well via the pump directly from its shipping container (e.g., a truck, a railcar, a barge, or the like) or from a transport pipeline. In either case, the fluids may be drawn into the pump, elevated to an appropriate pressure, and then introduced for delivery downhole.

### EXAMPLES

The non-limiting and non-exhaustive examples that follow are intended to further describe various non-limiting and non-exhaustive embodiments without restricting the scope of the embodiments described in this specification. All quantities given in "parts" and "percents" are understood to be by weight, unless otherwise indicated.

Although the present invention is exemplified herein in the context of a proppant coated with a biocide, the present inventors envision that any functional chemical may be included in the polyurethane dispersion as desired. Such functional chemicals include, but are not limited to, demulsifiers, emulsifiers, corrosion inhibitors, dispersants, filtrate reducers, water clarifiers / deoilers, fluid-loss additives, flocculants, foaming agents, defoaming agents, scale inhibitors, shale control inhibitors, viscosifiers, thinners, wax inhibitors, asphaltene inhibitors, hydrate inhibitors, biocides, rheology modifiers, trace/tagging agents, co-surfactants, co-solvents, H₂S scavengers, ion exchange resins, cement gas blocking agents, cement retarders, de-watering additives, bentonite extenders, friction reducers, gelling agents, gel breakers, iron control additives, clay stabilizers, and iron sulfide dissolvers.

The following materials were used in the formulations of the examples:

| | |
|---|---|
| DISPERSION A | an anionic aliphatic polyether/polycarbonate polyurethane dispersion in water, 60% by weight non-volatile content, commercially available from Covestro as IMPRANIL DLU; |
| BIOCIDE A | a copper halide based antimicrobial from Agienic, Inc.; |
| SAND A | 20/40 mesh, commercially available from Chippewa Sand Co. |

All results reported herein were after completion of the recommended 28 day incubation period for microbial growth tests.

Five samples of sand/proppant that contained various coatings were sent to an external laboratory (Intertek Westport Technology Center, Houston, TX) for testing. These proppant samples were labeled as T, U, W, X and Y without providing the external laboratory with any information regarding which samples may contain biocide. A solid sample of a biocide that was added to sand/proppant-free control samples to achieve a biocide concentration of 2000 ppm was also provided to the external laboratory.

| **Sample** | **Description** |
|---|---|
| T | 0.5% DISPERSION A on SAND A |
| U | 0.5% DISPERSION A on SAND A |
| W | 0.5% DISPERSION A + BIOCIDE A (2000 ppm) on SAND A |
| X | 0.5% DISPERSION A + BIOCIDE A (2000 ppm) on SAND A |
| Y | SAND A |
| Control | BIOCIDE A (2000 ppm) |

Serum bottles were used to create and maintain anaerobic conditions for the testing of proppant materials in two types of water: a 6% salinity brine at 45°C, and a simulated hydraulic frac fluid at 30°C. 50 grams of proppant were added to serum bottles containing 100 ml of liquid and about 105 cells/ml of mixed cultures of Acid Producing Bacteria (APB)/General Heterotrophic Bacteria (GHB) and Sulfate Reducing Bacteria (SRB) were added to all samples that were then incubated at either 30°C or 45°C for 6 weeks to allow bacteria to grow. Then the surviving concentrations of planktonic and biofilm populations of APB/GHB and SRB were quantified in microbial growth tests using single dilution series according to the NACE Method TMO194. Single samples were used for the quantification of planktonic cell populations while triplicate samples of biofilm were obtained from each sample and the average of these triplicate analyses were used to report the results.

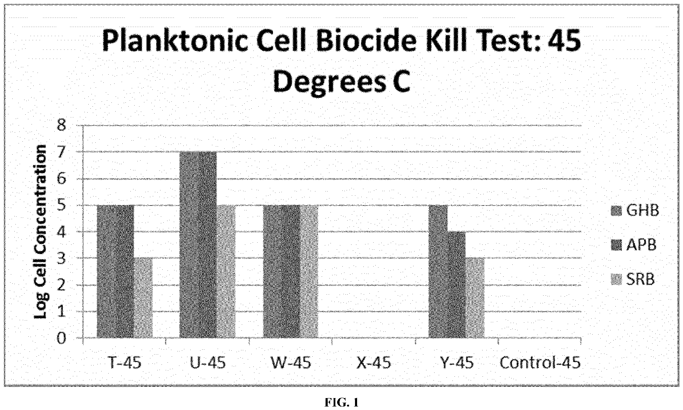

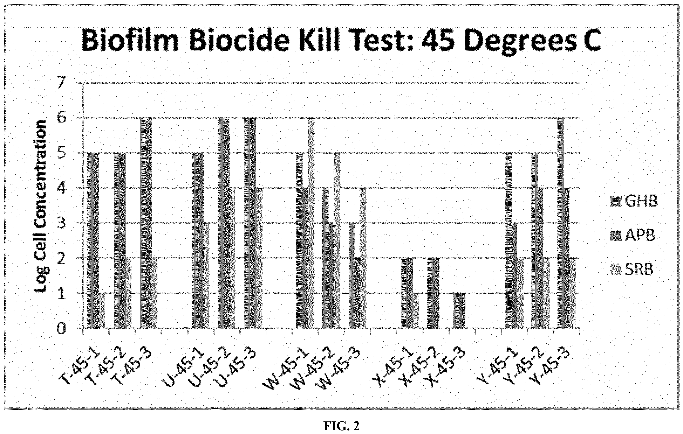

The mixed microbial culture grown at 45°C in a 6% salt solution was typical of a moderate temperature subsurface environment in a petroleum-bearing rock formation. When this mixed culture was incubated for six weeks in the presence of sand coated with different materials the surviving concentrations of APB/GHB and SRB in the water phase (planktonic cells) and attached to sand surfaces (biofilm or sessile cells) were quantified in microbial growth tests. FIGS 1 and 2 respectively show the results of planktonic and biofilm (sessile) cells obtained from the 45°, 6% salinity test conditions, with GHB being the leftmost bar, APB being the middle bar and SRB being the rightmost bar in each grouping of three bars.

In the 45°C, 6% salinity brine planktonic cells were killed in sample X and in the biocide control. The concentration of planktonic cells in SAMPLES T & U were somewhat higher than in the sand control (SAMPLE Y), but more data is needed to determine if the presence of resin material was influencing the concentration of planktonic microbial cells.

The results shown in FIG. 2 illustrate that there is a good agreement in the values obtained from triplicate sub-samples derived from each test condition, with the exception of SAMPLE W which showed more variability. The trends observed with the data from biofilm samples were the same as for the 45°C planktonic samples. The lowest cell concentrations were in SAMPLE X that contained resin plus biocide, but unexpectedly SAMPLE W that also contained resin plus biocide had higher biofilm concentrations similar to the values obtained with the sand control SAMPLE Y. SAMPLES T & U that contained resin coated sand had somewhat higher cells concentrations than the sand control SAMPLE Y, but the available data are insufficient to conclude whether bacteria were utilizing resin as a growth substrate.

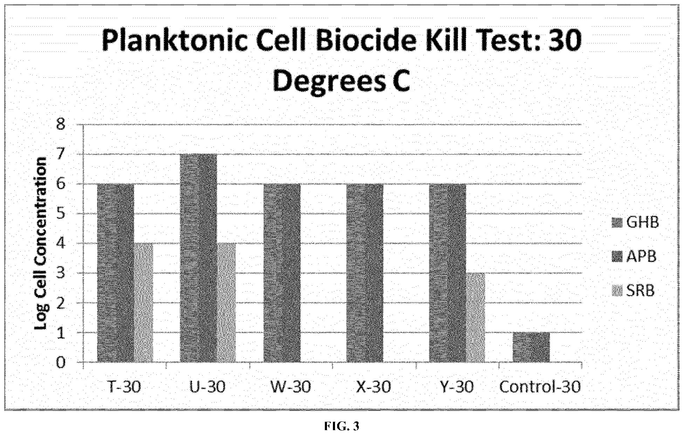

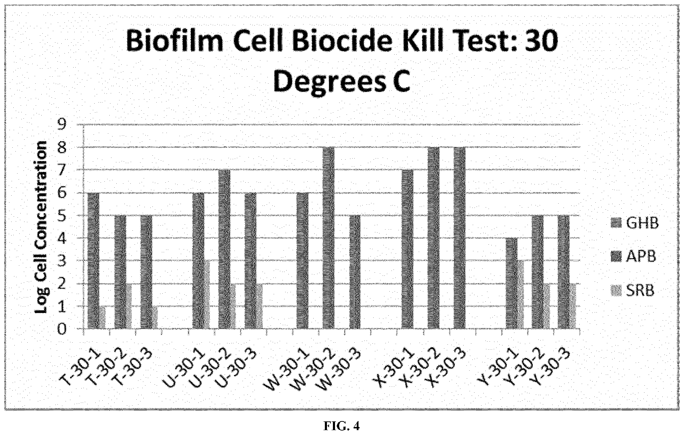

The mixed microbial culture grown at 30°C in a simulated hydraulic frac solution was typical of surface solutions associated with hydraulic frac operations. When this mixed culture was incubated for six weeks in the presence of sand coated with different materials the surviving concentrations of APB/GHB and SRB in the water phase (planktonic cells) and attached to sand surfaces (biofilm or sessile cells) were quantified in microbial growth tests. FIGS. 3 and 4 respectively show the results of planktonic and biofilm (sessile) cells obtained from 30°C cultures in simulated hydraulic frac fluid, with GHB being the leftmost bar, APB being the middle bar and SRB being the rightmost bar in each grouping of three bars.

The 30°C planktonic cells show that the presence of biocide in SAMPLES W & X resulted in killing SRB, but not APB/GHB. The biofilm (sessile) results in FIG. 4 from all of the triplicate sub-SAMPLES from conditions W & X also show killing of SRB, but not APB/GHB.

In summary, the results of these limited biocide efficacy tests indicate that the presence of biocide incorporated into the resin of resin-coated sand shows microbial killing, but the results are somewhat variable. Proppant SAMPLES W & X were intended to be replicate samples containing resin plus biocide, but they are derived from independent batches of material so the different results obtained with SAMPLES W versus X may be related to variations in the preparation of the resin-coated sand product. Also, the species of bacteria that grow at 45°C in 6% salinity brine are different than bacteria that grow at 30°C in simulated hydraulic frac fluid, so that should be kept in mind when interpreting the results of this study. Treatment condition W showed little or no killing of planktonic or biofilm (sessile) cells at 45°C while treatment condition X showed complete killing of all planktonic cells, nearly complete killing of SRB in biofilms, and significant killing of APB/GHB in biofilms. For the tests performed at 30°C, test conditions W & X yielded highly similar results showing that SRB were killed in both planktonic cell and biofilm populations, but APB/GHB were unaffected. Because the in situ temperature in petroleum-bearing geological formations where hydraulic fracturing is typically performed is nearly always higher than 30°C, the fact that the resin plus biocide coated samples performed better at 45°C than 30°C suggest these products will perform better at the higher temperatures commonly encountered in oil industry applications.

These results indicate that biocide coated proppants inhibit biofilm formation on proppant material injected during hydraulic fracing. This inhibition of biofilm growth should maintain the permeability of the frac zone resulting in better and longer lasting productivity from the wells receiving this material. Moreover, the strong inhibition of the growth of SRB will aid in preventing reservoir souring and the production of hydrogen sulfide.

This specification has been written with reference to various non-limiting and non-exhaustive embodiments. However, it will be recognized by persons having ordinary skill in the art that various substitutions, modifications, or combinations of any of the disclosed embodiments (or portions thereof) may be made within the scope of this specification. Thus, it is contemplated and understood that this specification supports additional embodiments not expressly set forth herein. Such embodiments may be obtained, for example, by combining, modifying, or reorganizing any of the disclosed steps, components, elements, features, aspects, characteristics, limitations, and the like, of the various non-limiting embodiments described in this specification. In this manner, Applicant(s) reserve the right to amend the claims during prosecution to add features as variously described in this specification, and such amendments comply with the requirements of 35 U.S.C. §112(a), and 35 U.S.C. §132(a).

Various aspects of the subject matter described herein are set out in the following numbered clauses:
1. A proppant coated with a composition comprising a resin-containing dispersion, and a functional chemical.
2. The proppant according to clause 1, wherein the resin-containing dispersion is selected from the group consisting of polyurethane dispersions, blends containing polyurethane dispersions, acrylate dispersions and styrene butadiene rubber ("SBR") latex dispersions or a mixture of at least two thereof.
3. The proppant according to one of clauses 1 or 2, wherein the functional chemical is selected from the group consisting of demulsifiers, emulsifiers, corrosion inhibitors, dispersants, filtrate reducers, water clarifiers / deoilers, fluid-loss additives, flocculants, foaming agents, defoaming agents, scale inhibitors, shale control inhibitors, viscosifiers, thinners, wax inhibitors, asphaltene inhibitors, hydrate inhibitors, biocides, rheology modifiers, trace/tagging agents, co-surfactants, co-solvents, H₂S scavengers, ion exchange resins, cement gas blocking agents, cement retarders, de-watering additives, bentonite extenders, friction reducers, gelling agents, gel breakers, iron control additives, clay stabilizers, and iron sulfide dissolvers or a mixture of at least two thereof.
4. The proppant according to one of clauses 1 or 2, wherein the functional chemical is selected from the group consisting of aldehydes, quaternary phosphonium compounds, quaternary ammonium surfactants, cationic polymers, organic bromides, metronidazole, isothiazolones, isothiazolinones, thiones, organic thiocyanates, phenolics, alkylamines, diamines, triamines, dithiocarbamates, 2-(decylthio)ethanamine (DTEA) and its hydrochloride, triazine derivatives, hypochlorite and hypobromite salts, stabilized bromine chloride, hydroxyl radicals, chloramines, chlorine dioxide, chloroisocyanurates, halogen-containing hydantoins, hydrogen peroxide, and peracetic acid or a mixture of at least two thereof.
5. The proppant according to one of clauses 1 or 2, wherein the functional chemical is selected from the group consisting of 2,2-dibromo-3-nitrilopropionamide, magnesium nitrate, glutaraldehyde, 2-bromo-2-cyanoacetamide, caprylic alcohol, triethylene glycol, sodium dodecyl diphenyl ether disulfonate, 2-amino-2-methyl-1-propanol, ethelenediaminetetraacetate, 5-chloro-2-methyl-4-isothiazolin-3-one, benzisothiazolinone, ethoxylated oleylamine, 2-methyl-4-isothiazolin-3-one, formaldehyde, dibromoacetonitrile, dimethyl oxazolidine, 2-bromo-2-nitro-1,3-propanediol, tetrahydro-3, 5-dimethyl-2h-1,3,5-thia, 3,5-dimethyltetrahydro-1,3,5-thiadiazine-2-thione, tetrakis hydroxymethyl-phosphonium sulfate, formaldehyde amine, quaternary ammonium chloride, C₆-C₁₂ ethoxylated alcohols, benzalkonium chloride, C₁₂-C₁₄ ethoxylated alcohols, C₁₂-C₁₆ ethoxylated alcohols, oxydiethylene bis(alkyldimethyl ammonium chloride), didecyl dimethyl ammonium chloride, 3,4,4-trimethyl oxazolidine, cetylethylmorpholinium ethyl sulfate, and tributyltetradecylphosphonium chloride or a mixture of at least two thereof.
6. The proppant according to one of clauses 1 or 2, wherein the functional chemical is a biocide selected from the group consisting of copper halides, zinc halides and silver halides or a mixture of at least two thereof.
7. The proppant according to one of clauses 1 to 6, wherein the proppant is selected from the group consisting of sand, mineral fiber, a ceramic particle, a bauxite particle, a glass particle, a metal bead, a walnut hull, a porous polymer particle a composite particle and coated sand or a mixture of at least two thereof.
8. One of a coating, an adhesive, or a sealant including the proppant according to one of clauses 1 to 7.
9. The proppant according to one of clauses 1 to 8, wherein the resin-containing dispersion is a polyurethane dispersion.
10. A process comprising coating a proppant particle with a composition comprising a resin-containing dispersion and a functional chemical.
11. The process according to clause 10, wherein the resin-containing dispersion is selected from the group consisting of polyurethane dispersions, blends containing polyurethane dispersions, acrylate dispersions and styrene butadiene rubber ("SBR") latex dispersions or a mixture of at least two thereof.
12. The process according to one of clauses 10 and 11, wherein the functional chemical is selected from the group consisting of demulsifiers, emulsifiers, corrosion inhibitors, dispersants, filtrate reducers, water clarifiers / deoilers, fluid-loss additives, flocculants, foaming agents, defoaming agents, scale inhibitors, shale control inhibitors, viscosifiers, thinners, wax inhibitors, asphaltene inhibitors, hydrate inhibitors, biocides, rheology modifiers, trace/tagging agents, co-surfactants, co-solvents, H₂S scavengers, ion exchange resins, cement gas blocking agents, cement retarders, de-watering additives, bentonite extenders, friction reducers, gelling agents, gel breakers, iron control additives, clay stabilizers, and iron sulfide dissolvers or a mixture of at least two thereof.
13. The process according to one of clauses 10 and 11, wherein the functional chemical is selected from the group consisting of aldehydes, quaternary phosphonium compounds, quaternary ammonium surfactants, cationic polymers, organic bromides, metronidazole, isothiazolones, isothiazolinones, thiones, organic thiocyanates, phenolics, alkylamines, diamines, triamines, dithiocarbamates, 2-(decylthio)ethanamine (DTEA) and its hydrochloride, triazine derivatives, hypochlorite and hypobromite salts, stabilized bromine chloride, hydroxyl radicals, chloramines, chlorine dioxide, chloroisocyanurates, halogen-containing hydantoins, hydrogen peroxide, and peracetic acid or a mixture of at least two thereof.
14. The process according to one of clauses 10 and 11, wherein the functional chemical is selected from the group consisting of 2,2-dibromo-3-nitrilopropionamide, magnesium nitrate, glutaraldehyde, 2-bromo-2-cyanoacetamide, caprylic alcohol, triethylene glycol, sodium dodecyl diphenyl ether disulfonate, 2-amino-2-methyl-1-propanol, ethelenediaminetetraacetate, 5-chloro-2-methyl-4-isothiazolin-3-one, benzisothiazolinone, ethoxylated oleylamine, 2-methyl-4-isothiazolin-3-one, formaldehyde, dibromoacetonitrile, dimethyl oxazolidine, 2-bromo-2-nitro-1,3-propanediol, tetrahydro-3, 5-dimethyl-2h-1,3,5-thia, 3,5-dimethyltetrahydro-1,3,5-thiadiazine-2-thione, tetrakis hydroxymethyl-phosphonium sulfate, formaldehyde amine, quaternary ammonium chloride, C₆-C₁₂ ethoxylated alcohols, benzalkonium chloride, C₁₂-C₁₄ ethoxylated alcohols, C₁₂-C₁₆ ethoxylated alcohols, oxydiethylene bis(alkyldimethyl ammonium chloride), didecyl dimethyl ammonium chloride, 3,4,4-trimethyl oxazolidine, cetylethylmorpholinium ethyl sulfate, and tributyltetradecylphosphonium chloride or a mixture of at least two thereof.
15. The process according to one of clauses 10 and 11, wherein the functional chemical is a biocide selected from the group consisting of copper halides, zinc halides and silver halides.
16. The process according to one of clauses 10 to 15, wherein the proppant is selected from the group consisting of sand, mineral fiber, a ceramic particle, a bauxite particle, a glass particle, a metal bead, a walnut hull, a porous polymer particle a composite particle and coated sand or a mixture of at least two thereof.
17. One of a coating, an adhesive, or a sealant including the proppant made according to one of clauses 10 to 16.
18. The proppant according to one of clauses 10 to 17, wherein the resin-containing dispersion is a polyurethane dispersion.
19. A process of reducing bacterial growth and related odors in an oil and/or gas well comprising introducing into the well a plurality of proppants coated with a composition comprising a resin-containing dispersion and a functional chemical.
20. The process according to clause 19, wherein the resin-containing dispersion is selected from the group consisting of polyurethane dispersions, blends containing polyurethane dispersions, acrylate dispersions and styrene butadiene rubber ("SBR") latex dispersions or a mixture of at least two thereof.
21. The process according to one of clauses 19 and 20, wherein the functional chemical is selected from the group consisting of aldehydes, quaternary phosphonium compounds, quaternary ammonium surfactants, cationic polymers, organic bromides, metronidazole, isothiazolones, isothiazolinones, thiones, organic thiocyanates, phenolics, alkylamines, diamines, triamines, dithiocarbamates, 2-(decylthio)ethanamine (DTEA) and its hydrochloride, triazine derivatives, hypochlorite and hypobromite salts, stabilized bromine chloride, hydroxyl radicals, chloramines, chlorine dioxide, chloroisocyanurates, halogen-containing hydantoins, hydrogen peroxide, and peracetic acid or a mixture of at least two thereof.
22. The process according to one of clauses 19 and 20, wherein the functional chemical is selected from the group consisting of 2,2-dibromo-3-nitrilopropionamide, magnesium nitrate, glutaraldehyde, 2-bromo-2-cyanoacetamide, caprylic alcohol, triethylene glycol, sodium dodecyl diphenyl ether disulfonate, 2-amino-2-methyl-1-propanol, ethelenediaminetetraacetate, 5-chloro-2-methyl-4-isothiazolin-3-one, benzisothiazolinone, ethoxylated oleylamine, 2-methyl-4-isothiazolin-3-one, formaldehyde, dibromoacetonitrile, dimethyl oxazolidine, 2-bromo-2-nitro-1,3-propanediol, tetrahydro-3, 5-dimethyl-2h-1,3,5-thia, 3,5-dimethyltetrahydro-1,3,5-thiadiazine-2-thione, tetrakis hydroxymethyl-phosphonium sulfate, formaldehyde amine, quaternary ammonium chloride, C₆-C₁₂ ethoxylated alcohols, benzalkonium chloride, C₁₂-C₁₄ ethoxylated alcohols, C₁₂-C₁₆ ethoxylated alcohols, oxydiethylene bis(alkyldimethyl ammonium chloride), didecyl dimethyl ammonium chloride, 3,4,4-trimethyl oxazolidine, cetylethylmorpholinium ethyl sulfate, and tributyltetradecylphosphonium chloride or a mixture of at least two thereof.
23. The process according to one of clauses 19 and 20, wherein the functional chemical is a biocide selected from the group consisting of copper halides, zinc halides and silver halides or a mixture of at least two thereof.
24. The process according to one of clauses 19 to 23, wherein the proppant is selected from the group consisting of sand, mineral fiber, a ceramic particle, a bauxite particle, a glass particle, a metal bead, a walnut hull, a porous polymer particle a composite particle and coated sand or a mixture of at least two thereof.
25. One of a coating, an adhesive, or a sealant including the proppant made according to one of clauses 19 to 24.
26. The process according to clause 19, wherein proppant is introduced into the well in a hydraulic fracturing fluid.
27. The process according to one of clauses 19 to 26, wherein the resin-containing dispersion comprises a polyurethane dispersion.
28. The process according to one of clauses 19 to 27, wherein levels of Acid Producing Bacteria (APB) are lower after introducing the plurality of proppants compared to the levels before the step of introducing.
29. The process according to one of clauses 19 to 27, wherein levels of General Heterotrophic Bacteria (GHB) are lower after introducing the plurality of proppants compared to the levels before the step of introducing.
30. The process according to one of clauses 19 to 27, wherein levels of Sulfate Reducing Bacteria (SRB) are lower after introducing the plurality of proppants compared to the levels before the step of introducing.
31. A process of reducing well souring in an oil and/or gas well comprising introducing into the well a plurality of proppants coated with a composition comprising a resin-containing dispersion and a functional chemical.
32. The process according to clause 31, wherein the resin-containing dispersion is selected from the group consisting of polyurethane dispersions, blends containing polyurethane dispersions, acrylate dispersions and styrene butadiene rubber ("SBR") latex dispersions or a mixture of at least two thereof.
33. The process according to one of clauses 31 and 32, wherein the functional chemical is selected from the group consisting of aldehydes, quaternary phosphonium compounds, quaternary ammonium surfactants, cationic polymers, organic bromides, metronidazole, isothiazolones, isothiazolinones, thiones, organic thiocyanates, phenolics, alkylamines, diamines, triamines, dithiocarbamates, 2-(decylthio)ethanamine (DTEA) and its hydrochloride, triazine derivatives, hypochlorite and hypobromite salts, stabilized bromine chloride, hydroxyl radicals, chloramines, chlorine dioxide, chloroisocyanurates, halogen-containing hydantoins, hydrogen peroxide, and peracetic acid or a mixture of at least two thereof.
34. The process according to one of clauses 31 and 32, wherein the functional chemical is selected from the group consisting of 2,2-dibromo-3-nitrilopropionamide, magnesium nitrate, glutaraldehyde, 2-bromo-2-cyanoacetamide, caprylic alcohol, triethylene glycol, sodium dodecyl diphenyl ether disulfonate, 2-amino-2-methyl-1-propanol, ethelenediaminetetraacetate, 5-chloro-2-methyl-4-isothiazolin-3-one, benzisothiazolinone, ethoxylated oleylamine, 2-methyl-4-isothiazolin-3-one, formaldehyde, dibromoacetonitrile, dimethyl oxazolidine, 2-bromo-2-nitro-1,3-propanediol, tetrahydro-3, 5-dimethyl-2h-1,3,5-thia, 3,5-dimethyltetrahydro-1,3,5-thiadiazine-2-thione, tetrakis hydroxymethyl-phosphonium sulfate, formaldehyde amine, quaternary ammonium chloride, C₆-C₁₂ ethoxylated alcohols, benzalkonium chloride, C₁₂-C₁₄ ethoxylated alcohols, C₁₂-C₁₆ ethoxylated alcohols, oxydiethylene bis(alkyldimethyl ammonium chloride), didecyl dimethyl ammonium chloride, 3,4,4-trimethyl oxazolidine, cetylethylmorpholinium ethyl sulfate, and tributyltetradecylphosphonium chloride or a mixture of at least two thereof.
35. The process according to clause 31 and 32, wherein the functional chemical comprises a biocide selected from the group consisting of copper halides, zinc halides and silver halides.
36. The process according to one of clauses 31 to 35, wherein proppant is introduced into the well in a hydraulic fracturing fluid.
37. The process according to one of clauses 31 to 36, wherein the resin-containing dispersion comprises a polyurethane dispersion.
38. The process according to one of clauses 31 to 37, wherein levels of Acid Producing Bacteria (APB) are lower after introducing the plurality of proppants compared to the levels before the step of introducing.
39. The process according to one of clauses 31 to 37, wherein levels of General Heterotrophic Bacteria (GHB) are lower after introducing the plurality of proppants compared to the levels before the step of introducing.
40. The process according to one of clauses 31 to 37, wherein levels of Sulfate Reducing Bacteria (SRB) are lower after introducing the plurality of proppants compared to the levels before the step of introducing.
41. A hydraulic fracturing fluid comprising a carrier fluid and a plurality of proppants coated with a composition comprising a resin-containing dispersion and a functional chemical.
42. The hydraulic fracturing fluid according to clause 41, wherein the resin-containing dispersion is selected from the group consisting of polyurethane dispersions, blends containing polyurethane dispersions, acrylate dispersions and styrene butadiene rubber ("SBR") latex dispersions.
43. The hydraulic fracturing fluid according to one of clauses 41 and 42, wherein the functional chemical is selected from the group consisting of demulsifiers, emulsifiers, corrosion inhibitors, dispersants, filtrate reducers, water clarifiers / deoilers, fluid-loss additives, flocculants, foaming agents, defoaming agents, scale inhibitors, shale control inhibitors, viscosifiers, thinners, wax inhibitors, asphaltene inhibitors, hydrate inhibitors, biocides, rheology modifiers, trace/tagging agents, co-surfactants, co-solvents, H₂S scavengers, ion exchange resins, cement gas blocking agents, cement retarders, de-watering additives, bentonite extenders, friction reducers, gelling agents, gel breakers, iron control additives, clay stabilizers, and iron sulfide dissolvers or a mixture of at least two thereof.
44. The hydraulic fracturing fluid according to one of clauses 41 and 42, wherein the functional chemical is selected from the group consisting of aldehydes, quaternary phosphonium compounds, quaternary ammonium surfactants, cationic polymers, organic bromides, metronidazole, isothiazolones, isothiazolinones, thiones, organic thiocyanates, phenolics, alkylamines, diamines, triamines, dithiocarbamates, 2-(decylthio)ethanamine (DTEA) and its hydrochloride, triazine derivatives, hypochlorite and hypobromite salts, stabilized bromine chloride, hydroxyl radicals, chloramines, chlorine dioxide, chloroisocyanurates, halogen-containing hydantoins, hydrogen peroxide, and peracetic acid or a mixture of at least two thereof.
45. The hydraulic fracturing fluid according to one of clauses 41 and 42, wherein the functional chemical is selected from the group consisting of 2,2-dibromo-3-nitrilopropionamide, magnesium nitrate, glutaraldehyde, 2-bromo-2-cyanoacetamide, caprylic alcohol, triethylene glycol, sodium dodecyl diphenyl ether disulfonate, 2-amino-2-methyl-1-propanol, ethelenediaminetetraacetate, 5-chloro-2-methyl-4-isothiazolin-3-one, benzisothiazolinone, ethoxylated oleylamine, 2-methyl-4-isothiazolin-3-one, formaldehyde, dibromoacetonitrile, dimethyl oxazolidine, 2-bromo-2-nitro-1,3-propanediol, tetrahydro-3, 5-dimethyl-2h-1,3,5-thia, 3,5-dimethyltetrahydro-1,3,5-thiadiazine-2-thione, tetrakis hydroxymethyl-phosphonium sulfate, formaldehyde amine, quaternary ammonium chloride, C₆-C₁₂ ethoxylated alcohols, benzalkonium chloride, C₁₂-C₁₄ ethoxylated alcohols, C₁₂-C₁₆ ethoxylated alcohols, oxydiethylene bis(alkyldimethyl ammonium chloride), didecyl dimethyl ammonium chloride, 3,4,4-trimethyl oxazolidine, cetylethylmorpholinium ethyl sulfate, and tributyltetradecylphosphonium chloride or a mixture of at least two thereof.
46. The hydraulic fracturing fluid according to one of clauses 41 and 42, wherein the functional chemical comprises a biocide selected from the group consisting of copper halides, zinc halides and silver halides.
47. The hydraulic fracturing fluid according to one of clauses 41 to 46, wherein the resin-containing dispersion comprises a polyurethane dispersion.
48. An oil and/or gas well comprising a hydraulic fracturing fluid comprising a carrier fluid and a plurality of proppants coated with a composition comprising a resin-containing dispersion and a functional chemical.
49. The oil and/or gas well according to clause 48, wherein the resin-containing dispersion is selected from the group consisting of polyurethane dispersions, blends containing polyurethane dispersions, acrylate dispersions and styrene butadiene rubber ("SBR") latex dispersions.
50. The oil and/or gas well according to one of clauses 48 and 49, wherein the functional chemical is selected from the group consisting of demulsifiers, emulsifiers, corrosion inhibitors, dispersants, filtrate reducers, water clarifiers / deoilers, fluid-loss additives, flocculants, foaming agents, defoaming agents, scale inhibitors, shale control inhibitors, viscosifiers, thinners, wax inhibitors, asphaltene inhibitors, hydrate inhibitors, biocides, rheology modifiers, trace/tagging agents, co-surfactants, co-solvents, H₂S scavengers, ion exchange resins, cement gas blocking agents, cement retarders, de-watering additives, bentonite extenders, friction reducers, gelling agents, gel breakers, iron control additives, clay stabilizers, and iron sulfide dissolvers or a mixture of at least two thereof.
51. The oil and/or gas well according to one of clauses 48 and 49, wherein the functional chemical is selected from the group consisting of aldehydes, quaternary phosphonium compounds, quaternary ammonium surfactants, cationic polymers, organic bromides, metronidazole, isothiazolones, isothiazolinones, thiones, organic thiocyanates, phenolics, alkylamines, diamines, triamines, dithiocarbamates, 2-(decylthio)ethanamine (DTEA) and its hydrochloride, triazine derivatives, hypochlorite and hypobromite salts, stabilized bromine chloride, hydroxyl radicals, chloramines, chlorine dioxide, chloroisocyanurates, halogen-containing hydantoins, hydrogen peroxide, and peracetic acid or a mixture of at least two thereof.
52. The oil and/or gas well according to one of clauses 48 and 49, wherein the functional chemical is selected from the group consisting of 2,2-dibromo-3-nitrilopropionamide, magnesium nitrate, glutaraldehyde, 2-bromo-2-cyanoacetamide, caprylic alcohol, triethylene glycol, sodium dodecyl diphenyl ether disulfonate, 2-amino-2-methyl-1-propanol, ethelenediaminetetraacetate, 5-chloro-2-methyl-4-isothiazolin-3-one, benzisothiazolinone, ethoxylated oleylamine, 2-methyl-4-isothiazolin-3-one, formaldehyde, dibromoacetonitrile, dimethyl oxazolidine, 2-bromo-2-nitro-1,3-propanediol, tetrahydro-3, 5-dimethyl-2h-1,3,5-thia, 3,5-dimethyltetrahydro-1,3,5-thiadiazine-2-thione, tetrakis hydroxymethyl-phosphonium sulfate, formaldehyde amine, quaternary ammonium chloride, C₆-C₁₂ ethoxylated alcohols, benzalkonium chloride, C₁₂-C₁₄ ethoxylated alcohols, C₁₂-C₁₆ ethoxylated alcohols, oxydiethylene bis(alkyldimethyl ammonium chloride), didecyl dimethyl ammonium chloride, 3,4,4-trimethyl oxazolidine, cetylethylmorpholinium ethyl sulfate, and tributyltetradecylphosphonium chloride or a mixture of at least two thereof.
53. The oil and/or gas well according to one of clauses 48 and 49, wherein the functional chemical comprises a biocide selected from the group consisting of copper halides, zinc halides and silver halides.
54. The oil and/or gas well according to one of clauses 48 to 53, wherein the resin-containing dispersion comprises a polyurethane dispersion.
55. A process of hydraulically fracturing a geologic formation comprising: introducing a slurry comprising a plurality of proppant particles suspended in a carrier fluid into fissures in the formation, wherein the proppant particles are at least partially coated with a composition comprising a resin-containing dispersion and a functional chemical.
56. The process according to clause 55, wherein the resin-containing dispersion is selected from the group consisting of polyurethane dispersions, blends containing polyurethane dispersions, acrylate dispersions and styrene butadiene rubber ("SBR") latex dispersions or a mixture of at least two thereof.
57. The process according to one of clauses 55 and 56, wherein the functional chemical is selected from the group consisting of demulsifiers, emulsifiers, corrosion inhibitors, dispersants, filtrate reducers, water clarifiers / deoilers, fluid-loss additives, flocculants, foaming agents, defoaming agents, scale inhibitors, shale control inhibitors, viscosifiers, thinners, wax inhibitors, asphaltene inhibitors, hydrate inhibitors, biocides, rheology modifiers, trace/tagging agents, co-surfactants, co-solvents, H₂S scavengers, ion exchange resins, cement gas blocking agents, cement retarders, de-watering additives, bentonite extenders, friction reducers, gelling agents, gel breakers, iron control additives, clay stabilizers, and iron sulfide dissolvers or a mixture of at least two thereof.
58. The hydraulic fracturing fluid according to one of clauses 55 and 56, wherein the functional chemical is selected from the group consisting of aldehydes, quaternary phosphonium compounds, quaternary ammonium surfactants, cationic polymers, organic bromides, metronidazole, isothiazolones, isothiazolinones, thiones, organic thiocyanates, phenolics, alkylamines, diamines, triamines, dithiocarbamates, 2-(decylthio)ethanamine (DTEA) and its hydrochloride, triazine derivatives, hypochlorite and hypobromite salts, stabilized bromine chloride, hydroxyl radicals, chloramines, chlorine dioxide, chloroisocyanurates, halogen-containing hydantoins, hydrogen peroxide, and peracetic acid or a mixture of at least two thereof.
59. The hydraulic fracturing fluid according to one of clauses 55 and 56, wherein the functional chemical is selected from the group consisting of 2,2-dibromo-3-nitrilopropionamide, magnesium nitrate, glutaraldehyde, 2-bromo-2-cyanoacetamide, caprylic alcohol, triethylene glycol, sodium dodecyl diphenyl ether disulfonate, 2-amino-2-methyl-1-propanol, ethelenediaminetetraacetate, 5-chloro-2-methyl-4-isothiazolin-3-one, benzisothiazolinone, ethoxylated oleylamine, 2-methyl-4-isothiazolin-3-one, formaldehyde, dibromoacetonitrile, dimethyl oxazolidine, 2-bromo-2-nitro-1,3-propanediol, tetrahydro-3, 5-dimethyl-2h-1,3,5-thia, 3,5-dimethyltetrahydro-1,3,5-thiadiazine-2-thione, tetrakis hydroxymethyl-phosphonium sulfate, formaldehyde amine, quaternary ammonium chloride, C₆-C₁₂ ethoxylated alcohols, benzalkonium chloride, C₁₂-C₁₄ ethoxylated alcohols, C₁₂-C₁₆ ethoxylated alcohols, oxydiethylene bis(alkyldimethyl ammonium chloride), didecyl dimethyl ammonium chloride, 3,4,4-trimethyl oxazolidine, cetylethylmorpholinium ethyl sulfate, and tributyltetradecylphosphonium chloride or a mixture of at least two thereof.
60. The hydraulic fracturing fluid according to one of clauses 55 and 56, wherein the functional chemical comprises a biocide selected from the group consisting of copper halides, zinc halides and silver halides or a mixture of at least two thereof.
61. The hydraulic fracturing fluid according to one of clauses 55 to 60, wherein the resin-containing dispersion comprises a polyurethane dispersion.

## Claims

1. A proppant coated with a composition comprising a resin-containing dispersion, and a functional chemical.

2. The proppant according to claim 1, wherein the resin-containing dispersion is selected from the group consisting of polyurethane dispersions, blends containing polyurethane dispersions, acrylate dispersions and styrene butadiene rubber ("SBR") latex dispersions or a mixture of at least two thereof.

3. The proppant according to claim 1 or 2, wherein the functional chemical is selected from the group consisting of demulsifiers, emulsifiers, corrosion inhibitors, dispersants, filtrate reducers, water clarifiers / deoilers, fluid-loss additives, flocculants, foaming agents, defoaming agents, scale inhibitors, shale control inhibitors, viscosifiers, thinners, wax inhibitors, asphaltene inhibitors, hydrate inhibitors, biocides, rheology modifiers, trace/tagging agents, co-surfactants, co-solvents, H₂S scavengers, ion exchange resins, cement gas blocking agents, cement retarders, de-watering additives, bentonite extenders, friction reducers, gelling agents, gel breakers, iron control additives, clay stabilizers, and iron sulfide dissolvers or a mixture of at least two thereof.

4. The proppant according to any of claims 1 to 3, wherein the functional chemical is selected from the group consisting of aldehydes, quaternary phosphonium compounds, quaternary ammonium surfactants, cationic polymers, organic bromides, metronidazole, isothiazolones, isothiazolinones, thiones, organic thiocyanates, phenolics, alkylamines, diamines, triamines, dithiocarbamates, 2-(decylthio)ethanamine (DTEA) and its hydrochloride, triazine derivatives, hypochlorite and hypobromite salts, stabilized bromine chloride, hydroxyl radicals, chloramines, chlorine dioxide, chloroisocyanurates, halogen-containing hydantoins, hydrogen peroxide, and peracetic acid or a mixture of at least two thereof.

5. The proppant according to any of claims 1 to 4, wherein the functional chemical is selected from the group consisting of 2,2-dibromo-3-nitrilopropionamide, magnesium nitrate, glutaraldehyde, 2-bromo-2-cyanoacetamide, caprylic alcohol, triethylene glycol, sodium dodecyl diphenyl ether disulfonate, 2-amino-2-methyl-1-propanol, ethelenediaminetetraacetate, 5-chloro-2-methyl-4-isothiazolin-3-one, benzisothiazolinone, ethoxylated oleylamine, 2-methyl-4-isothiazolin-3-one, formaldehyde, dibromoacetonitrile, dimethyl oxazolidine, 2-bromo-2-nitro-1,3-propanediol, tetrahydro-3, 5-dimethyl-2h-1,3,5-thia, 3,5-dimethyltetrahydro-1,3,5-thiadiazine-2-thione, tetrakis hydroxymethyl-phosphonium sulfate, formaldehyde amine, quaternary ammonium chloride, C₆-C₁₂ ethoxylated alcohols, benzalkonium chloride, C₁₂-C₁₄ ethoxylated alcohols, C₁₂-C₁₆ ethoxylated alcohols, oxydiethylene bis(alkyldimethyl ammonium chloride), didecyl dimethyl ammonium chloride, 3,4,4-trimethyl oxazolidine, cetylethylmorpholinium ethyl sulfate, and tributyltetradecylphosphonium chloride or a combination of at least two thereof.

6. The proppant according to any of claims 1 to 5, wherein the functional chemical is a biocide selected from the group consisting of copper halides, zinc halides and silver halides or a mixture of at least two thereof.

7. The proppant according to any or claims 1 to 6, wherein the proppant is selected from the group consisting of sand, mineral fiber, a ceramic particle, a bauxite particle, a glass particle, a metal bead, a walnut hull, a porous polymer particle a composite particle and coated sand or a mixture of at least two thereof.

8. One of a coating, an adhesive, or a sealant including the proppant according to any of claims 1 to 7.

9. The proppant according to any of claims 1 to 7, wherein the resin-containing dispersion is a polyurethane dispersion.

10. Use of the proppant according to any of claims 1 to 7 in reducing bacterial growth and related odors in an oil and/or gas well.

11. Use of the proppant according to claim 10, wherein levels of Acid Producing Bacteria (APB) are lower after introducing the proppant compared to the levels before introducing the proppant.

12. Use of the proppant according to claim 10, wherein levels of General Heterotrophic Bacteria (GHB) are lower after introducing the proppant compared to the levels before introducing the proppant.

13. Use of the proppant according to claim 10, wherein levels of Sulfate Reducing Bacteria (SRB) are lower after introducing the proppant compared to the levels before introducing the proppant.
